# EUROPEAN PATENT APPLICATION

(11) **EP 1 375 344 A1**
(43) Date of publication of application: **02.01.2004**
(21) Application number: 03076967.3
(22) Date of filing: 25.06.2003
(51) Int. Cl.: B64C 23/06, B64C 3/00

(54) **Winglet leading edge and its manufacturing method**

(30) Priority: 26.06.2002 ES 200201471
(71) Applicant: Gamesa Desarrollos Aeronauticos, S.A. (Sociedad Unipersonal), 01510 Minano (Alava) (ES)
(72) Inventor: Aldama Garcia de Vicuna, Pedro, 01510 Minano (Alava) (ES); Ayllon Romera, Fernando, 01510 Minano (Alava) (ES); Gonzalez Esteban, Arturo, 01510 Minano (Alava) (ES)

(57) **Abstract**

Winglet leading edge (4) made of only one part, which consists of one thin aluminum sheet that presents a long sinusoidal body open by one of its longitudinal edges, so that the structural weight of wing is favored, and its manufacturing method by a rubber stamping press combining a form die that reflects the complex leading edge shape and a counter mould made up of a polyurethane block included inside a box. With this press angles of great lean can be achieved, even with negative shapes made on big sheet heights and in short series.

## Description

### Abstract.

As its own name shows, the present invention relates to the manufacture of a leading edge made up of one part and which is part of an aircraft winglet. This complex part is manufactured by stamping, combining a male that reflects the leading edge shape and a counter-mould made up of a polyurethane block included inside a box.

### Background of the invention.

The winglet is a complement used in the aeronautical industry as a meted to reduce the aircraft induced resistance, reducing in this way the forces that present opposition to its advance. This resistance reduction means less fuel consumption. The winglet theoretical foundation is the diminution of wing tip vortex, now then, there is a conflict between the benefits presented in reducing the resistance and the disadvantages acquired with the weight rise that the winglet addition supposes. That is why all the details of conceptual calculation and design should be seriously taken into account. There are different configurations for winglets: a) with rounded edge: consists of a winglet that has got same profile as wing and which is just bent at the end of the wing in a big curvature radius. b) with abrupt edge: same as the previous one, but in this case there is a vertex in between wing and winglet. c) displaced afterwards of wing profile. The main disadvantage the abrupt edge winglet presents is that it incites to a limit layer loosening at vertex, increasing the drag and decreasing winglet effectiveness. For the present invention a rounded edge winglet with same profile as wing is established.

Various winglet configurations and placements have been suggested and are shown in issued patents. See, e.g., US 5.407.153 that presents an airplane wing modification kit to add a winglet to the 727 model jet aircraft, and US 5.348.253 , which presents a composite blended winglet. All these documents pretend to increase fuel efficiency redistributing the additional loads and avoiding new governmental regulations for those aircrafts that incorporate winglets. Now focusing on the existing background on presses used for forming metal sheets preferably of aluminum, two tendencies are observed: on the one hand those based on the productive methods, e.g. the GB 9421573.8 document, where the counter-mould constituted by a silicone elastomer that provides a high grade of elasticity and resistance to compression loads is highlighted. On the other hand, those where machinery solutions are proposed, like the EP 882528 document, which presents an specific press used for big aluminum profiles.

### Description of the invention.

The winglet leading edge is made up of one thin metal sheet which after being formed presents a long sinusoidal shape open by one of its longitudinal edges. The side located on winglet edge is the open edge of this conformed metal sheet.

It is an object of the present invention to provide the winglet with a leading edge made of only one part, which benefits the structural weight presented by the wing. The winglet leading edge presents an specific configuration that forces to look for structural solutions, which usually mean manufacturing noted part by joining smaller parts until the required length is obtained. But these solutions present the disadvantage of the weight, increased in fastening the parts all together.

It is another object of the present invention to use a metal sheet, preferably of aluminum, to form the winglet leading edge. This metal sheet starts form 0 condition, and then it is heat treated and taken to the AQ status corresponding to the softest status of the material. Once it has been conformed it is aged to T42 final status. The metal sheet must always be constituted by one part of open and stamp able walls.

It is another object of this invention that the aforementioned part is made up by a press, using a die that considers the shape of the part and a counter-mould made of a polymeric material, preferably a polyurethane with a certain hardness. With the die cut made by such a constituted press great lean shapes can be achieved, even with negative shapes, made on very high sheets and in short series. The form die reflects the big complexity of the part shape and incorporates complementary fastening elements for a better fixing of the metal sheet to be conformed, making the aircraft piloting much easier.

It is still another object of this invention to insert the part corresponding to the counter-mould inside a metallic box that maintains a constant compression of the polymeric material during the manufacturing process, preventing part from dilations and deformations. And it is also an object of this invention that the groove of the part inserted in the counter-mould presents sharp edges so that the metal sheet does not get into the counter-mould too quickly, which would increase the risk of wrinkles.

From all the previously described the advantages derived from the manufacturing process can be easily deducted. By using a press that can cold form the part in one go the mechanical cart - useless because of the part insertion height - and the handicraft methods consisting on stepping on the back of the part and then conforming it laterally with edges or carts can be replaced. The advantages of the leading edge made up of one part are also obvious in terms of economic, assembly and manufacturing saving.

In order to make the explanation easier, a drawing sheet is attached, in which a practical case of this invention significance is represented.

### Brief description of the drawings.

Figure 1 is a perspective of the wing tip where the winglet leading edge is shown in an exploded way.
Figures 2 and 3 are both perspectives of the mould, the metallic leading edge already shaped and the counter-mould, all of which is shown according to two exploded representations, one of the mould and the other one of the counter-mould.
Figure 4 represents a detailed perspective of the counter-mould showing its interior, overflow channels and general shape.
Figure 5 is a plan view of the closed mould containing all its elements and showing by fine lines the different positions the metallic sheet acquires during its forming process.
Figures 6, 7 & 8 are transversal sections of previous figure mould, sections B, C and D to be precise. The different extreme dispositions of the metal sheet are shown by fine lines.

### Description of the preferred embodiments of the inventory.

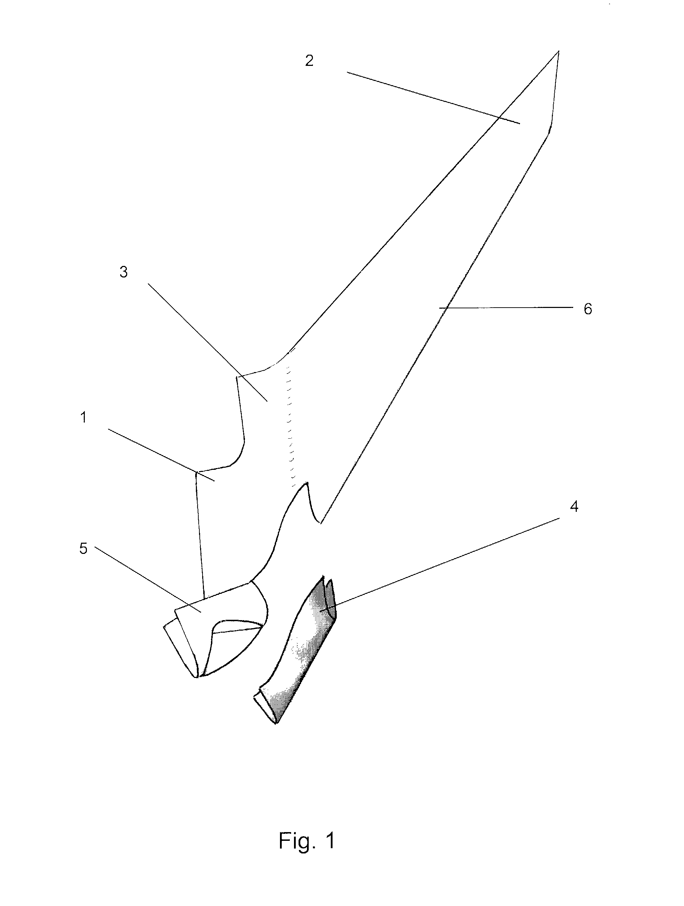

As shown on figure 1, the aircraft wing (1) extends bending up and ending in the wing tip (2). The transition zone (3) has a characteristic curvature that is included in the aforementioned design of rounded edge winglets, i.e., it consists of a winglet that has got the same profile as wing (1) and which is simply bent at its end. In the bend zone (3) there is no vertex but a big curvature angle which reduces the vortex caused at wing end (1). So, this invention is about a winglet with a big curvature radius, which is shown in the constitution of a leading edge (4) with a complex and curved shape. This leading edge (4) is made up of only one part and is located between the lens (5) and the wing tip leading edge (6).

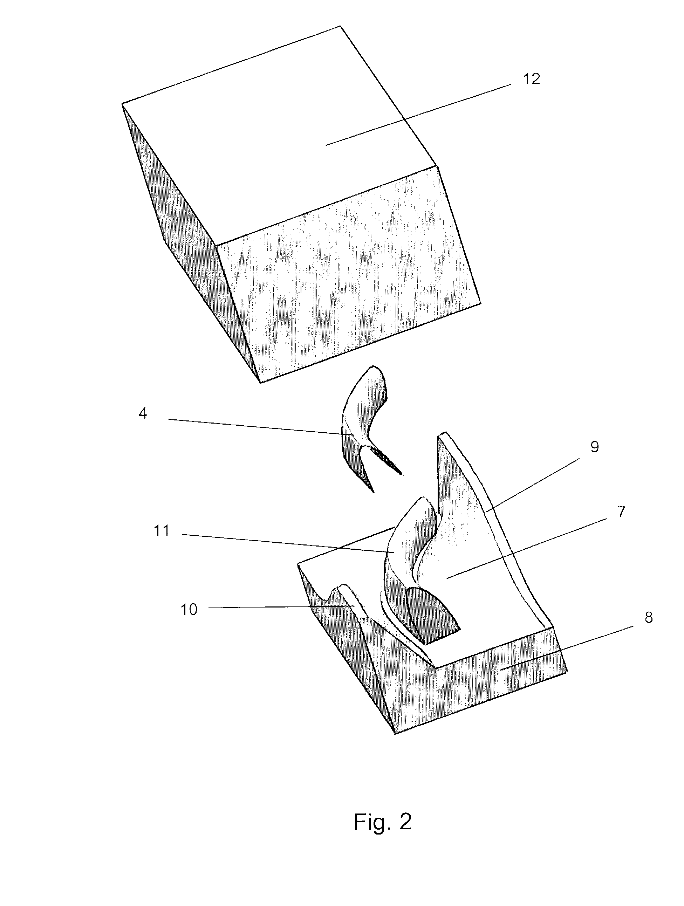

Figure 2 shows the mould corresponding part (7), which is a constituent element of an industrial press where the leading edge (4) is conformed starting from a metal sheet. As preferred embodiment of this invention a metal sheet is used to form the edge (4), which is made of a 2024 Al-clad sheet 0.063" thick. The mould (7) has a rectangular base (8) on which both walls (9 and 10) rise asymmetrical from a longitudinal axis that crosses the mould. The walls (9 & 10) decrease in a convex way from their maximum height until the rectangular base (8) and also towards the interior of the mould (7). The work surface (11) rises in relief from the central zone of the rectangular base (8), delimited between the walls (9 & 10) previously described. This work surface relief (11 ) has identical sinusoidal contour as the conformed part corresponding the leading edge (4).

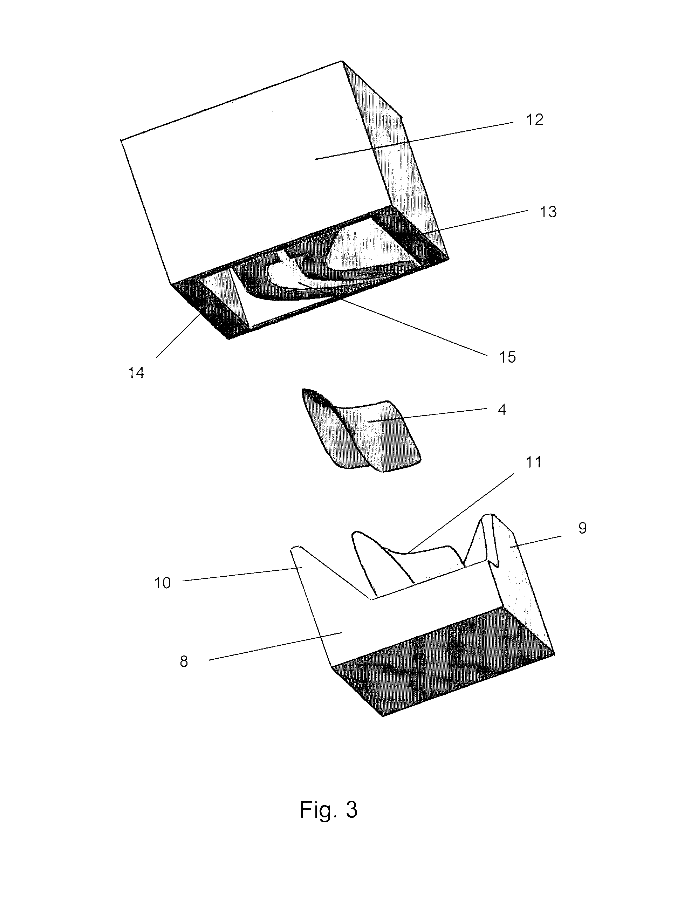

Figure 3 shows the same representation as the previous figure but detailing the counter-mould corresponding part (12). Here it can be appreciated how the leading edge (4) is constituted by displacing the counter-mould (12) on the mould (7), going the walls (9 & 10) of the mould (7) into the existing hollows between the walls (13 & 14) and the work surface (15) of the counter-mould (12). With the previously referenced, the counter-mould (12) is made up of an empty box inside which the work surface is set out (15), which is made up of a grooved elastomer that extends between the four walls, setting out the whole so formed totally faced up to the contact surface (11) of mould (7). The metal sheet to be conformed is fixed in one of the work surface ends (11) of the mould(7) and next its stamping is carried out by entering the mould (7) into the counter-mould (12).

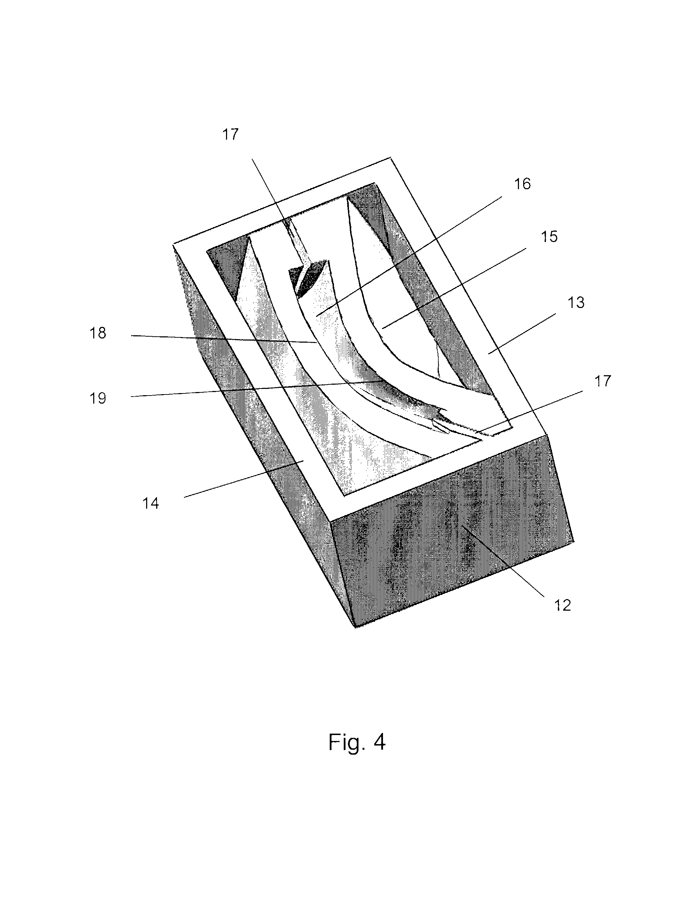

As shown on figure 4, the counter-mould (12) has inside the work surface (15) made up of an elastomer that, in the practical representation here developed, is made of a polyurethane that presents a shore hardness of 90. This elastomer presents a main groove (16) that extends longitudinally to work surface (15) and has the precise size to be perfectly fitted in the work surface (11) of the mould (7) conforming the leading edge (4). A constant penetration strength should be maintained the whole time, avoiding irregularities which could be transferred to the leading edge (4) as wrinkles. At both ends of this main groove (16) there are secondary grooves (17) that extend until the end of the work surface (15), allowing the penetration of the counter-mould (12) into the mould (7) by providing an access path. The main groove (16) has very sharp edges (18 & 19) to prevent the counter-mould (12) from going into the mould (7) too quickly, which could cause wrinkles on the part to be formed.

## Claims

1. Leading edge for rounded edge type winglet consisting of a winglet which has the same profile as the wing and bends at wing end, corresponding the bend- or transition zone (3) to a wide curvature radius **characterized by** being made up of a thin metal sheet that represents a long sinusoidal shape open by one of its longitudinal edges, the open edge of the conformed metal sheet being the one that is located between the lens(5) and the leading edge tip (6) covering the winglet edge. This winglet leading edge (4) is made of only one part by die cut with metallic mould and elastomer counter-mould.

2. Leading edge according to the previous claim, which is **characterized by** being made up of a thin metal sheet of open and stamp able walls, preferably of 2024 Al-clad, that starts from 0 condition, is heat solution treated and conformed into the softest condition, and finally, once it has been conformed, it is left in rest until reaching the final status.

3. Manufacturing method of a leading edge carried out by using a mould (7) which has a rectangular base (8) and two walls (9 & 10) asymmetrical from a longitudinal axis that crosses the mould, decreasing the walls (9 & 10) in a convex way from their maximum height until the rectangular base (8) and towards the interior of the mould (7); on the aforementioned rectangular base (8) rises in relief the work surface (11) delimited between the walls (9 & 10) previously described, this work surface relief (11) having identical sinusoidal contour as the conformed part corresponding the leading edge (4).

4. Manufacturing method according the previous claim, in which the counter-mould (12) is made up of an empty box inside which the work surface (15) is located. This work surface (15) is made of a grooved elastomer placed between the four walls, presenting a main groove (16) that extends longitudinally to the work surface (15), having such a size that fits perfectly in the work surface (11) of mould (7) conforming the leading edge (4). At the ends of the main groove (16) there are secondary grooves (17) that extend until the end of the work surface (15), being the edges (18 & 19) of the main groove very sharp to prevent counter-mould (12) from getting too quickly into the mould(7) causing wrinkles on the part to be formed.

5. Manufacturing method of a winglet leading edge in which the leading edge is formed by displacing the counter-mould (12) onto the mould (7), being inserted the work surface (11) of mould(7) into the work surface (15) of counter-mould (12) with a constant penetration strength.
